# EUROPEAN PATENT SPECIFICATION

(11) **EP 1 988 731 B1**
(45) Date of publication and mention of the grant of the patent: **12.10.2011**
(21) Application number: 07301012.6
(22) Date of filing: 02.05.2007
(51) Int. Cl.: H04W 48/16

(54) **Method for establishing a parameterized wireless communication channel**
Verfahren zur Etablierung eines parametrisierten Kanals zur drahtlosen Kommunikation
Procédé pour établir un canal de communication sans fil paramétré

(43) Date of publication of application: 05.11.2008
(73) Proprietor: Alcatel Lucent, 75008 Paris (FR)
(72) Inventor: Soulie, Antoine, 75014 Paris (FR); Urie, Alistair, 92130 Issy-les-Moulineaux (FR)
(74) Representative: Keseris, Denis

(56) References cited:
- EP-B- 0 869 647
- US-A1- 2002 006 167
- US-A1- 2004 047 296
- US-A1- 2006 114 815
- US-B1- 6 707 856

## Description

The invention relates to systems and methods for wireless communications networks, especially flexible broadband wireless systems.

### Background of the invention

Modern cellular networks are following a general trend of evolution towards higher transfer rates and better support for mobility. In this context, OFDM (Orthogonal Frequency Division Multiplexing) techniques have an excellent potential since they can achieve a wide range of transfer rates in a variety of physical environments. Therefore, a number of modern standards have adapted OFDM-based physical layers, e.g. WIFI, WIMAX, 3G LTE and Flash OFDM. While existing standards-based OFDM systems have some degree of flexibility, every system has a set of standard-specific parameters that are mandatory and that render the system suitable for only a predefined domain of operating conditions, e.g. in terms of data rates, ranges, mobility. A channel cannot be established if those conditions are not met.

US-A-2006/114815 discloses a fixedly configured OFDM system in which a CDMA signal obtained by spreading known pilot data by a spreading code is transmitted in the same frequency band as that of the OFDM signal.

EP-869647-A2 discloses a scaleable OFDM system comprising control circuitry for scaling various operating parameters and characteristics of an OFDM channel so as to support a variety of services, in a variety of environments, indoor as well as outdoor and in radio channels with differing bandwidths. In operation, a receiving station sends a request for particular operating parameters through its OFDM transmitter to the OFDM receiver of a transmitting station. Dynamic control circuitry at the transmitting station dynamically scales the operating parameters, such as data rate between the stations. It follows from this mode of operation that operating parameters can only be scaled after a remote terminal has initially synchronized with a base station. Therefore, the initial access of the remote terminal to the radio network can only be achieved by using a predefined physical OFDM profile. When synchronization of the OFDM channel is absent or lost, the OFDM system always starts or re-starts with operating parameters corresponding to low data rate between the base station and a remote unit.

US-B-6 707 856 discloses a method in accordance with the preamble of claim 1.

### Summary of the invention

For a wireless receiver to synchronize with a transmitter, it must learn or detect the characteristics of the channel used by the transmitter. While a radio receiver can typically scan a predefined frequency band until it detects the carrier frequency used by the transmitter, such an approach is not workable for wireless systems having a high number of degrees of freedom. Indeed, the time needed for a receiver to scan the entire multidimensional space of possible operating points, until synchronization with the transmitter is achieved, would be unreasonable.

According to one aspect, it is an object of the invention to provide a flexible wireless communication system that can operate in a variety of situations, e.g. regarding number of users, environmental conditions, service requirements. According to another aspect, it is an object of the invention to provide a flexible wireless communication system that enables a broadband transmitter and a broadband receiver to synchronize in a variety of situations, e.g. regarding number of users, environmental conditions, service requirements. According to still another aspect, it is an object of the invention to provide a flexible wireless communication device adapted to dynamically change its operating parameters without loosing connectivity with other communication devices.

According to the invention, these objects are achieved by a method in accordance with claim 1.

According to embodiments of the method, the following features can be taken individually or in combination:
- the physical profile data defines a signal bandwidth of said traffic communication channel.
- the parameterized wireless communication means includes an orthogonal frequency division multiplexing baseband module.
- the physical profile data defines at least one parameter selected from the group consisting of a signal bandwidth, a number of subcarriers, a sampling frequency, a subcarrier spacing and a symbol duration.
- the spread spectrum channel includes a direct sequence spread spectrum channel.
- the spread spectrum channel and the parameterized traffic communication channel use one of a time-division duplexing (TDD) technique and a frequency-division duplexing (FDD) technique.

The invention provides also a wireless communication device in accordance with claim 7.

In embodiments of the wireless communication device, the spread spectrum communication module includes at least one of a spread spectrum wireless transmitter, a spread spectrum wireless receiver and a spread spectrum wireless transceiver. Similarly, the traffic communication module includes at least one of an orthogonal frequency division multiplexing wireless transmitter, an orthogonal frequency division multiplexing wireless receiver and an orthogonal frequency division multiplexing wireless transceiver.

According to embodiments of the wireless communication device, the following features can be taken individually or in combination:
- a shared radio frequency front-end for both the spread spectrum communication means and the parameterized communication means.
- the parameterized communication means includes an orthogonal frequency division multiplexing baseband module.
- the spread spectrum communication means includes a direct sequence spread spectrum baseband module.
- the physical profile data includes a physical profile currently used in the parameterized communication means.
- the physical profile data includes a future physical profile and a time information for using the future physical profile.
- the spread spectrum communication means is arranged for using a predefined spread spectrum channel or a predefined set of spread spectrum channels.

The invention provides also a base station comprising the wireless communication device, wherein the spread spectrum communication means is capable of transmitting the physical profile data in broadcast mode in at least one cell.

In an embodiment, the spread spectrum communication means is capable of transmitting a plurality of physical profile data sets allocated to a corresponding plurality of wireless terminals on the spread spectrum channel.

The invention provides also a wireless terminal comprising the communication device, wherein the spread spectrum communication means is capable of receiving the physical profile data on the spread spectrum channel.

The wireless terminal can be fixed or mobile.

In an embodiment, the spread spectrum communication means is capable of sending physical profile request data on the spread spectrum channel for causing a base station to transmit physical profile data in response to said physical profile request data.

In an embodiment, the physical profile request data comprise a description of a physical condition of the terminal, such as velocity or position or other.

### Brief description of the drawings

These and other aspects of the invention will be apparent from and elucidated with reference to the embodiments described hereinafter, by way of example, with reference to the drawings.
Figure 1 shows a block diagram of a flexible system in accordance with a general embodiment of the invention.
Figures 2 shows the spectra of spread spectrum and OFDM signals used in the system of Figure 1.
Figure 3 shows a communication device in accordance with an embodiment of the invention.
Figure 4 shows an embodiment of a configuration advertisement message.
Figure 5 shows a block diagram of a flexible OFDM system in accordance with an illustrative embodiment of the invention.
Figures 6 and 7 show the spectra of radio signals used in the system of Figure 5.
Figure 8 shows a block diagram of a flexible system in accordance with an illustrative embodiment of the invention.
Figures 9 to 12 show wireless communication systems in accordance with other embodiments of the invention.
Figure 13 shows a block diagram of a flexible system in accordance with an illustrative embodiment of the invention.
Figure 14 shows the spectrum of radio signals used in the system of 13.
Figure 15 shows a configuration advertisement message used in the system of figure 13.

### Detailed description of the preferred embodiments

Below will be described several embodiments of a wireless communication system that comprises a main system for implementing a traffic communication channel, e.g. OFDM or other and a secondary system for implementing a secondary channel, e.g. spread spectrum or other. The secondary channel overlaps with the traffic channel in the frequency domain, yet it does not adversely affect the operation of the main system. The secondary system serves to provide information to a configuration system for configuring the main system.

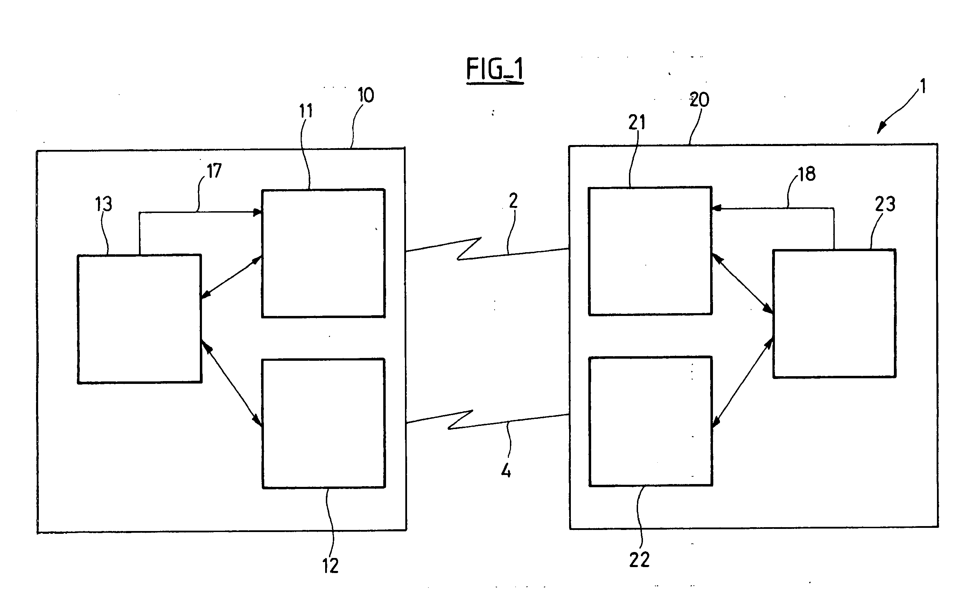

Referring to Figure 1, there is shown an OFDM communication system 1 that comprises two communication devices 10 and 20. Each communication device 10, 20 comprises an OFDM communication module 11, 21 capable of establishing a wireless OFDM communication channel 2 between the communication devices 10 and 20 for transferring data at a high data-rate, e.g. above 1 Mbps. The OFDM communication can be unidirectional or bidirectional. Each communication device 10, 20 also comprises a spread spectrum communication module 12, 22 capable of establishing a wireless spread spectrum communication channel 4 between the communication devices 10 and 20 for transferring data at a medium or low data-rate. The spread spectrum communication can be unidirectional or bidirectional. The spreading technique can be one of frequency hopping and direct sequence spectrum spreading (DSSS). According to embodiments, the communication system 1 may be a point-to-multipoint system comprising at least one base station servicing at least one cell and at least one wireless terminal located in the cell, or a peer-to-peer communication system.

According to embodiments, OFDM communication module 11 or 21 includes a radio receiver and an OFDM baseband module for reception of data, or a radio transmitter and an OFDM baseband module for transmission of data, or both. According to embodiments, spread spectrum communication module 12 or 22 includes a radio receiver and a spread spectrum baseband module for reception of data, or a radio transmitter and a spread spectrum baseband module for transmission of data, or both. In embodiments where one or both of the channels 2 and 4 are bidirectional, the duplexing technique can be either time division duplexing or frequency division duplexing. The OFDM communication module 1 or 21 and spread spectrum communication module 12 or 22 of the same communication device 10 or 20 may share some components, e.g. a shared radio front-end as will be explained below.

The OFDM communication modules 11 and 21 are implemented as flexible modules that include dynamically configurable or programmable components for dynamically changing at least one operating parameter of the OFDM communication channel 2. For example, the flexible OFDM communication modules 11 and 21 can be implemented using technology known as software-defined radios. Each communication device 10 20 also comprises an OFDM management module 13. 23 for controlling the configuration of the OFDM communication modules 11 or 21 as a function of the OFDM operating parameters to be applied, as shown by arrows 17 and 18.

Communication devices 10 and 20 use the spread spectrum channel 4 as a management channel for exchanging instructions relating to the operating parameters to be applied for establishing the OFDM channel 2. The spread spectrum channel 4 serves to communicate some or all of the operating parameters that are necessary for establishing the OFDM channel 2. According to one embodiment, the OFDM management modules 13 and 23 cooperate in a master/slave relationship, i.e. one of the communication devices 10 and 20 has mastership over the other communication device and uses the spread spectrum channel 4 for communicating the operating parameters to the other communication device. Mastership with respect to OFDM channel configuration can be set permanently or dynamically between the communication devices 10 and 20. According to another embodiment, the OFDM management modules 13 and 23 are capable of negotiating over the spread spectrum channel 4 to determine the operating parameters to be applied to the OFDM channel 2.

In one embodiment, the spread spectrum channel 4 is a static, predefined channel the parameters of which are preset or built-in in the spread spectrum communication modules 12 and 22. For example, the center frequency and the spreading sequence or frequency hopping sequence can be predefined and preconfigured in the communication devices 10 and 20, as well as in other communication devices, e.g. a plurality of wireless terminals. In another embodiment, the communication devices 10 and 20 are capable of negociating some parameters of the spread spectrum channel 4. However, the most basic physical parameters of the spread spectrum channel 4 are preferably preset so that the spread spectrum communication modules 12 and 22 can always synchronize at the physical level without having to rely on an external source of information.

In an embodiment, the spread spectrum communication module comprises a data repository with a list of predefined profiles stored therein, e.g. a list of spreading sequences. In order to synchronize with the other communication device, the spread spectrum communication module tries out the profiles one after the other.

In a preferred embodiment, the spread spectrum channel 4 has an operational frequency band that overlaps at least part of an operational frequency band of the OFDM channel 2. The processing gain of the spread spectrum channel 4, i.e. the ratio of the data rate to the symbol rate, is set sufficiently high so that the spread spectrum channel can be received by the spread spectrum communication module 12 or 22, yet not degrade the performance of the OFDM channel 2. For example, a processing gain of 500 can be obtained with a 10 kbps data flow transmitted in a 5 MHz channel. The processing gain is related to the length of the spreading sequence.

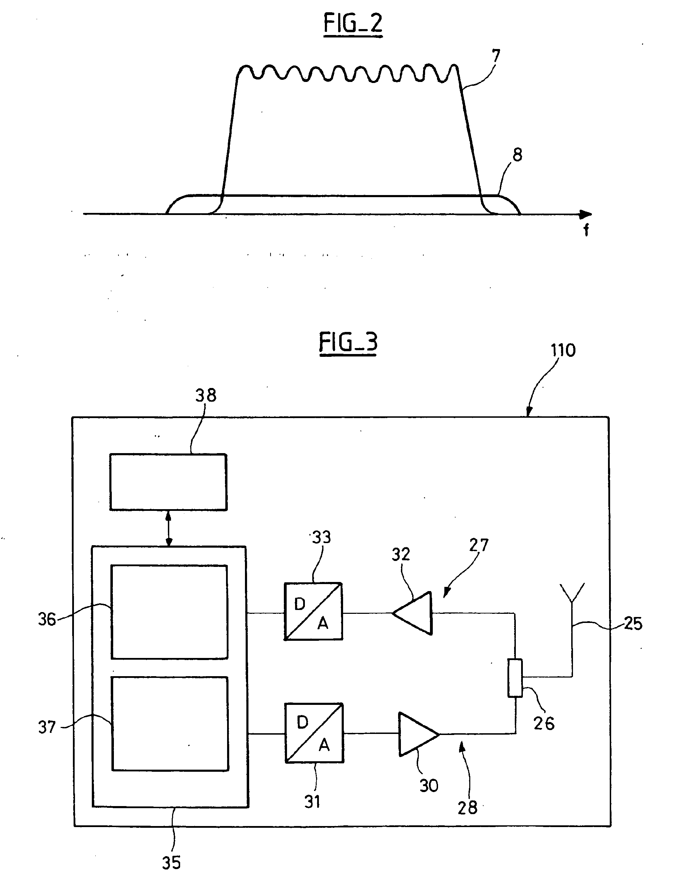

Due to the very nature of spread spectrum signals, the spread spectrum channel 4 can transport data between the communication devices 10 and 20 with a spectral density of power very substantially lower than the density of power of the OFDM channel 2 in the operational frequency band of interest. This is illustrated in Figure 2, which represents very schematically the spectrum 7 of an OFDM channel and the spectrum 8 of a DSSS channel. Therefore, although the OFDM signal and the spread spectrum signal are overlaid in time and frequency, the spread spectrum signal does not impair the ability of the OFDM communication modules to receive and decode the OFDM signal because of the low power level of the spread spectrum signal. Conversely, the OFDM signal does not impair the ability of the spread spectrum communication modules to receive and decode the spread spectrum signal because the de-spreading correlation process in the spread spectrum communication module yields a clear correlation peak for the originally spreaded signal, whereas this de-spreading process makes the overlaid OFDM signal appear as a low level random noise well below that peak. According to a preferred embodiment, the spectral density of power of the DSSS channel is below the environmental noise level.

In a preferred embodiment, the OFDM channel is used with a multiple access scheme known as OFDMA or Scalable OFDMA. In this case, in a given time slot, several group of subcarriers are allocated to different terminals. In the present specification, OFDM encompasses any waveform based on orthogonal subcarriers.

The operating parameters that are transmitted on the spread spectrum channel 4 can be of various types. Examples of operating parameters relevant to OFDM or OFDMA channels can be found in IEEE Standard for Local and Metropolitan area networks, Part 16: Air Interface for Fixed Broadband Wireless Access Systems, IEEE Std 802.16-2004. A static, predefined spread spectrum channel is especially suitable for communicating a set of physical parameters that are fundamental to the definition of the OFDM channel. Fundamental here means that lack of prior knowledge of those physical parameters would make it very hard or impossible for an OFDM receiver to detect and synchronize with an OFDM transmitter that uses those physical parameters. Below is an illustrative, non-limitative list of such physical parameters:

OFDM channel bandwidth, Number of sub-carriers, sub-carrier frequency, sub-carrier spacing, identification of data sub-carriers, identification of pilot sub-carriers, identification of null subcarriers, identification of sub-carrier groups (or subchannels, segments, bins, clusters, bands), Sub-channel rotation scheme, frame duration, Symbol duration, sampling frequency, Guard interval, cyclic prefix duration, FEC code type, FEC coding rate, Data randomization related parameters, Data interleaving parameters.

Other operating parameters which can be communicated and potentially negotiated on the spread spectrum channel are: Center carrier frequency, Channel number, Permutation formula, Duplexing-related parameters, duplexing method FDD parameters, Downlink carrier frequency, uplink carrier frequency, TDD parameters, Downlink transmission period, uplink transmission period, transition gap, Synchronization information, Timers, Burst size, Baseband processing parameters, Symbol rate, Modulation rate, Modulation type, Number of bits per symbol, Repetition coding, Ranging parameters, Ranging method, Ranging channel, Ranging code, Transmit diversity scheme, Beam selection, Power-related parameters, maximum transmission power, power boosting, power control method, power adjustment rule, thresholds of all kinds, security related parameters, ciphering method, encryption method, security association, spreading parameters, sequence generator seed and others.

Parameters can be communicated on the spread spectrum channel 4 in various manners, i.e. explicitely or implicitely. A message communicated on the spread spectrum channel 4 can include physical values for corresponding physical parameters, or abstract identifiers, e.g. profile numbers referring to a predefined physical profile, i.e. a predefined physical parameter value or set of physical parameter values. Predefined physical profiles can be stored in any suitable data repository in the communication devices 10 and 20, e.g. a non-volatile memory.

In a preferred embodiment, the communication device 10 or 20 can be implemented with a shared radio front-end. Figure 3 shows schematically an embodiment of a software-defined flexible radio communication device 110 having a shared radio front-end for both an OFDM baseband module 36 and a DSSS baseband module 37. The architecture of Figure 3 can serve to implement both communication devices 10 and 20. The shared radio front-end includes an antenna 25 and an antenna filter 26 connected to both a receive path 27 and a transmit path 28. The receive path 27 comprises a low noise amplifier 32 and an analog-to-digital converter 33. The transmit path 28 comprises a digital-to-analog converter 31 and a power amplifier 30. The antenna filter 26 is tunable in a broad frequency band, e.g. from 400 MHz to 5 GHz or a subrange of that range. The amplifiers 30 and 32 and converters 31 and 33 cover the complete frequency band as well. The OFDM baseband module 36 is implemented in a digital processing module 35 having software re-programmability without any hardware change. The digital processing module 35 can be implemented using reprogrammable components such as FPGA and DSP. The DSSS baseband module 37 can be implemented in the digital processing module 35 as well. Alternatively, the DSSS baseband module is implemented in a separate digital processing module. For a static, predefined spread spectrum channel, the DSSS baseband module can be implemented in a hardware-configured component such as an ASIC. An OFDM management module 38 controls the configuration of the OFDM baseband module 36 as a function of the OFDM operating parameters to be applied. In the communication device 10 or 20 that has mastership with respect to OFDM channel configuration, the OFDM management module 38 re-programs the OFDM baseband module 36 as a function of the operating parameters that it has decided to apply. It also generates configuration advertisement messages that include a definition of those operating parameters. The DSSS baseband module 37 processes the configuration advertisement messages for sending them to the slave communication device or devices. In the slave communication device, the OFDM management module 38 reads the configuration advertisement messages to determine the operating parameters to be applied and re-programs the OFDM baseband module 36 accordingly. It can also generate an acknowledgement message to be sent to the master communication device on the spread spectrum channel. In the case where operating parameters are negociated, the OFDM management module 38 in both communication devices is able to both read and write data transmitted and received over the spread spectrum channel.

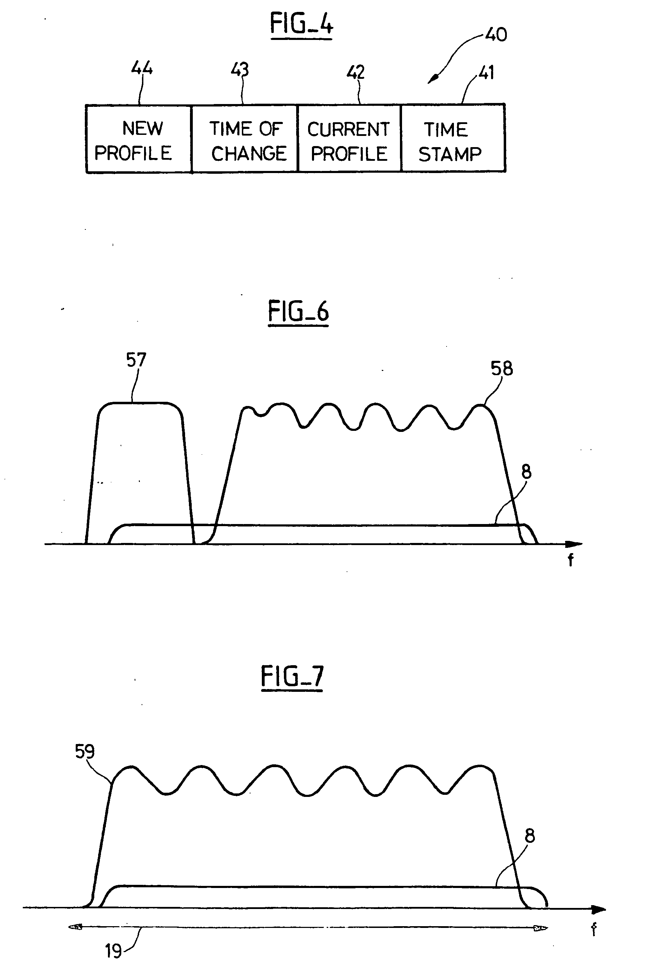

Figure 4 shows a configuration advertisement message format that may be used in embodiments of communication devices 10 and 20. The configuration advertisement message 40 comprises a time stamp field 41 for indicating a time at which the message was generated, a current profile field 42 for carrying profile data relating to the physical profile parameters being currently used by the flexible OFDM communication modules 11 and 21, a time of change field 43 for indicating a time at which the flexible OFDM communication modules 11 and 21 shall switch to another physical profile, and a new profile field 44 for carrying profile data relating to the physical profile parameters to be used from the time indicated in the field 43. The communication system 1 may also use other configuration advertisement message formats. For example, a first configuration advertisement message includes the fields 41 and 42 and a second configuration advertisement message includes the fields 43 and 44. Fields can also be replaced with equivalent objects, e.g. TLV (type, length, value) objects.

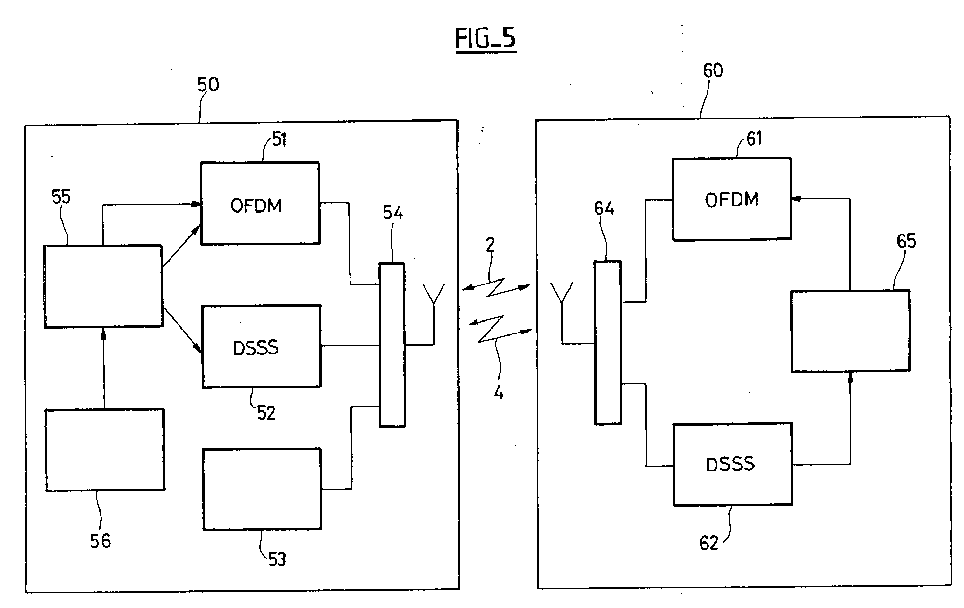

In embodiments, the communication system 1 is a point-to-multipoint OFDM system comprising at least one base station and a plurality of wireless terminals. Such an embodiment is schematically illustrated in figure 5. A multistandard base station 50 comprises a flexible OFDM baseband module 51, a spread spectrum baseband module 52 and a third baseband module 53 pertaining to another radio system, e.g. GSM baseband module. Preferably, a shared radio front-end 54 serves all three baseband modules. Alternatively, several radio front-ends could be provided. An OFDM management module 55 controls the configuration of the OFDM baseband module 51 as a function of the OFDM operating parameters to be applied. In the illustrative embodiment, the OFDM operating parameters are changed for the purpose of spectrum management. A spectrum management module 56 decides how much spectrum should be allocated to the OFDM communication channel 2 based on external information about spectrum availability, e.g. whether the GSM system is currently in use or not.

If the GSM system is active, the spectrum management module 56 allocates a first bandwidth value to the OFDM management module 55. The OFDM management module 55 determines and applies a set of operating parameters that constrains the OFDM channel 2 within that bandwidth. This situation is shown in figure 6, which schematically shows the spectrum of the GSM signal 57 and the spectrum of the OFDM signal 58 having the first bandwidth value. If the GSM system is inactive, the spectrum management module 56 allocates a second bandwidth value to the OFDM management module 55. The OFDM management module 55 determines and applies a second set of operating parameters that constrains the OFDM channel 2 within that bandwidth. This situation is shown in figure 7, which schematically shows the spectrum of the OFDM signal 59 having the second bandwidth value. The spectrum management method executed by the spectrum management module 56 enables the system to make an optimal use of a predefined frequency band 19, e.g. a licensed frequency band, that is shared by several radio systems. The total available frequency band 19 may be 10 MHz or 20 MHz wide, or even larger. In the embodiment shown figure 7, the OFDM channel can be scaled to make use of the full available frequency band 19.

There are several ways of setting the bandwidth of the OFDM channel 2. For exemple, the OFDM management module 55 can change the number of active subcarriers, or the subcarrier spacing, or other parameters.

Figure 5 shows also a flexible OFDM terminal 60 that comprises a flexible OFDM baseband module 61, a spread spectrum baseband module 62 and a shared radio front-end 64 for both baseband modules. Alternatively, several radio front-ends could be provided. An OFDM management module 65 controls the configuration of the OFDM baseband module 61 as a function of the OFDM operating parameters to be applied. In an embodiment, the OFDM management module 65 operates as a slave and the OFDM management module 55 as a master.

The base station 50 can notify in advance the OFDM terminal 60 of any change in the operating parameters through corresponding configuration advertisement messages. These messages can be broadcasted on the spread spectrum channel 4 and/or on the OFDM channel 2. However, the advertisements broadcasted on the OFDM channel 2 may not be received by OFDM terminals that are not yet synchronized with the base station 50, whereas the advertisements broadcasted on the static spread spectrum channel 4 may be received by all terminals configured to receive that spread spectrum channel. Therefore, when the terminal 60 is just switched on, it starts to acquire the OFDM physical profile by listening to the spread spectrum channel 4. Once the OFDM management module 65 has received the information to determine the physical profile that is applied, it configures the OFDM baseband module 61, which can then perform the attachment to the base station through the OFDM channel 2. If the terminal 60 is already attached to the base station 50 at the time when a change in physical profile occurs, it can obtain the new profile and the time of change either on the spread spectrum channel 4 or on the OFDM channel 2 (e.g. in a portion of the OFDM frame dedicated to broadcast messages). In an embodiment, the base station uses a broadcast control channel of the OFDM frame for sending an instruction to the terminals 60 located in the corresponding cell, so that the terminals 60 start listening to the spread spectrum channel in response to that instruction. Therefore, the terminals 60 already attached to the base station 50 can obtain the OFDM profile update through the spread spectrum channel 4 without having to be permanently listening to that channel. Alternatively, the operating parameters of the OFDM channel can be broadcasted according to a predefined scheme, e.g. periodically.

In the above embodiment, the OFDM operating parameters are changed for the purpose of spectrum management and dynamic spectrum resource sharing, thereby improving multi-radio co-existence. This embodiment enables a base station to operate several radio standards in the same frequency band while being transparent to legacy systems, e.g. GSM.

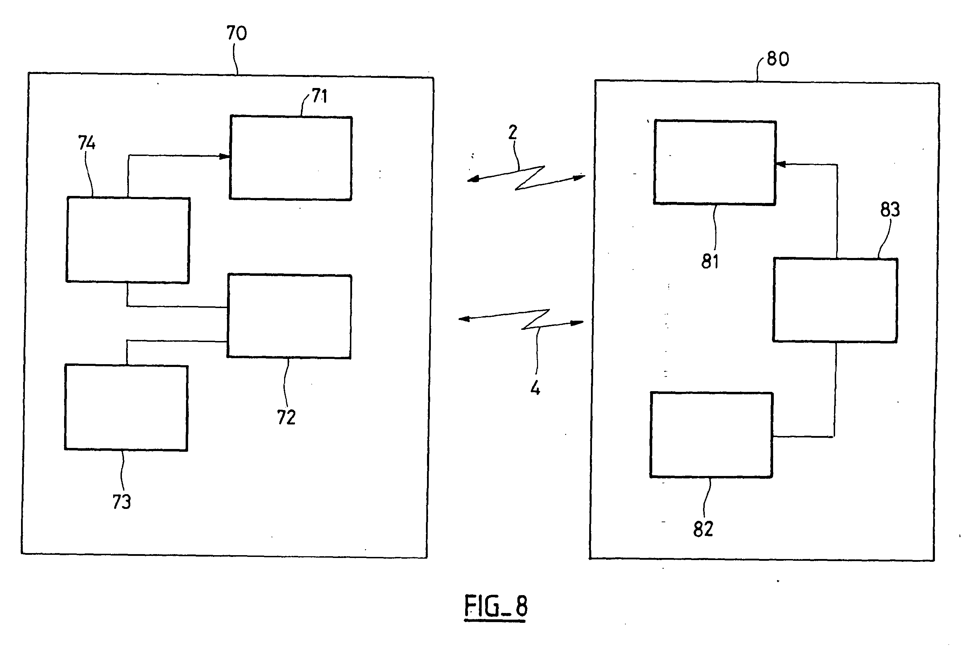

The OFDM management module can also serve other purposes than spectrum management, e.g. adapting the OFDM channel to specific requirements of a wireless terminal or to specific transmission conditions. This is illustrated in figure 8. In figure 8, a first communication device 70, e.g. a wireless terminal, comprises a flexible OFDM communication module 71 and a spread spectrum communication module 72. A second communication device 80, e.g. a base station, comprises a flexible OFDM communication module 81 capable of establishing an OFDM communication channel 2 with the communication device 70 and a spread spectrum communication module 82 capable of establishing a wireless spread spectrum communication channel 4 with the communication device 70. In the terminal 70, a state monitoring device 73 determines a physical state of the terminal, e.g. a velocity or position or other condition of the terminal. The state monitoring device 73 comprises or is connected to corresponding sensors or measurement devices, e.g. a Global Positoning System receiver or speed sensor. The spread spectrum communication module 72 sends a channel adaptation request to the base station 80. The channel adaptation request includes parameters describing the physical state of the terminal 70. In the base station 80, the spread spectrum communication module 82 decodes the signal and communicates the channel adaptation request to the OFDM management module 83. The OFDM management module 83 determines the physical state parameters comprised in the request and an OFDM physical profile adapted to those physical state parameters. This embodiment enables the base station 80 to adapt the OFDM downlink channel to a physical state of the terminal, i.e. to one or several current conditions that have an impact on the radio reception capability of the terminal 70. By way of example, in response to a physical parameter describing a velocity of the terminal 70, the OFDM management module 83 selects a corresponding subcarrier spacing parameter that ensures a good reception of the downlink OFDM channel by the terminal 70. The OFDM physical profile selected by the OFDM management module 83 is communicated on the spread spectrum channel 4 to the spread spectrum communication module 72, which passes the physical profile to the OFDM management module 74 of the terminal 70. The OFDM management module 74 controls the flexible OFDM communication module 71 to apply physical profile so that the OFDM communication channel 2 can be established with the base station 80. Preferably, the OFDM communication channel 2 is bidirectional. A same physical profile or two different physical profiles can be selected for the uplink direction and the downlink direction.

Alternatively, the appropriate OFDM physical profile is determined by the OFDM management module 74 of the terminal 70 on the basis of inputs provided by the state monitoring device 73, and then communicated to the base station 80 in the channel adaptation request on the spread spectrum channel.

The physical profile selection and allocation can be implemented with different scopes. For example, the scope can be one terminal, i.e. the selected physical profile is applied to the connection between one terminal and the base station. Alternatively, the scope can be a cell, i.e. the selected physical profile is applied to all connections between terminals located in one cell and the base station. The messages transmitted on the spread spectrum channel include teminal identifiers or connection identifiers, where appropriate, to properly define the scope of the physical profile being negociated. Besides, the physical profile data may be transmitted in a broadcast mode or in a unicast mode depending on the intended scope.

With an appropriate processing gain, the spread spectrum communication channel, e.g. DSSS, can be made very robust against Doppler shift and multipath reception. Therefore, the spread spectrum channel 4 is very well-suited for communicating with terminals 70 that could be experiencing challenging radio conditions, e.g. moving at a high speed, and for negotiating the physical profile of the OFDM channel. Preferably, the spread spectrum communication modules 72 and 82 are preconfigured for achieving communication in the most difficult foreseen conditions, e.g. at maximum velocity of the terminal.

In an embodiment, the terminal 70 is installed in a land vehicle, such as a high speed train. As a function of the real-time velocity of the vehicle, the OFDM management module 83 selects a set of operating parameter values comprising a sub-carrier spacing value, a number of sub-carrier, an identification of pilot sub-carriers and a cyclic prefix length (i.e. guard time.) An illustrative rule for scaling the sub-carrier spacing is: the higher the velocity, the higher the sub-carrier spacing value. These and other operating parameters can be changed as a function of the physical state of the terminal. Besides, the terminal 70 and the base station 80 can negotiate an OFDM physical profile prior to any synchronization between the OFDM communication modules 71 and 81. This negotiation imposes no prerequisite on the OFDM channel. Therefore, using the spread spectrum channel overlaid in frequency with the OFDM channel, an adaptive modulation scheme in the meaning of Std IEEE 802.16-2004 can be implemented efficiently and further extended to any OFDM operating parameter.

While the above embodiments have been described with reference to OFDM traffic channels, other types of flexible broadband wireless systems can benefit from the same principles for dynamically adapting physical layer parameters, e.g. single-carrier or multi-carrier systems able to operate with variable parameters and configurations, e.g. variable bandwidth.

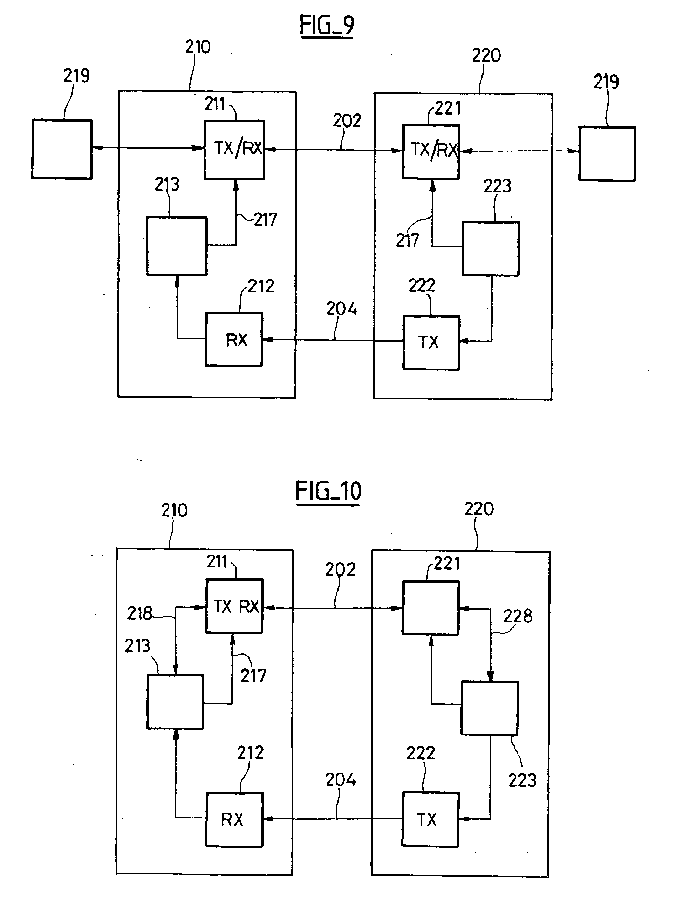

Figures 9 to 12 illustrate other embodiments of a wireless communication system that comprises a main system for implementing a traffic communication channel 202 (OFDM or other), a secondary system for implementing a secondary channel 204 (spread spectrum or other) and a configuration system for configuring the main system. In these figures, similar elements are represented by the same numeral. The communication system comprises at least two communication devices 210 and 220. The secondary system comprises secondary communication modules 212 and 222. The main system comprises parameterized communication modules 211 and 221. The configuration system comprises configuration management modules 213 and 223. TX refers to a transmitter and RX to a receiver. Configuration management modules 213 and 223 exchange or negociate physical parameters relating to traffic communication channel 202 on the secondary channel 204 through secondary communication modules 212 and 222. Once established, traffic communication channel 202 can also serve to exchange or negociate some physical parameters between configuration management modules 213 and 223. As shown by arrows 217, configuration management modules 213 and 223 dynamically control the configuration of communication modules 211 and 221 as a function of the physical parameters to be applied.

Figure 9 represents a simple cellular embodiment where device 210 is a terminal and device 220 is a base station that uses the secondary channel 204 in broadcast mode to communicate all operating parameters necessary for configuration management module 213 to configure parameterized communication module 211. Traffic communication channel 202 can be unidirectional or bidirectional. Modules 219 represent data sinks and/or data sources where communication modules 211 and 221 take or put the data communicated on channel 202.

Figure 10 represents an adaptive cellular embodiment, where device 210 is a terminal and device 220 is a base station that uses the secondary channel 204 to communicate a radio bootstrap, i.e. a set of basic parameters for configuration management module 213 to start configuring parameterized communication module 211 and establish a basic configuration of traffic channel 202. As shown by arrows 218 and 228, data is provided to or received from main communication modules 221 and 211 by configuration management modules 213 and 223 in order to broadcast and/or negociate additional parameters and future changes relating to traffic channel 202 on traffic channel 202 itself. Configuration management modules 213 and 223 may use traffic channel 202 unidirectionally or bidirectionally.

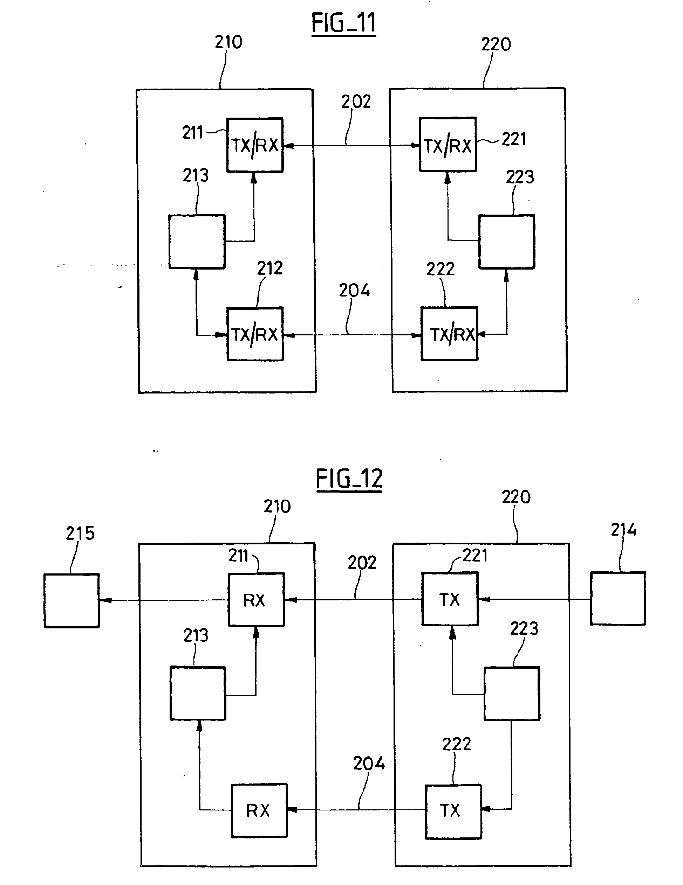

Figure 11 represents an adaptive cellular embodiment, where device 210 is a terminal and device 220 is a base station. Configuration management modules 213 and 223 use secondary channel 204 bidirectionally for negociating operating parameters relating to traffic channel 202.

Figure 12 represents a simple broadcast embodiment, where device 220 uses the secondary channel to announce main system parameters and future changes thereof to device 210. In an embodiment, parameterized communication modules 211 and 221 operate according to a digital video broadcasting standard, such as DVB-T for digital terrestrial television or other. Physical parameters of the broadcasting channel 202 that can be dynamically configured may include carrier frequency, coding method and others. The data broadcast on channel 202 is provided to transmitter module 221 by a data source 214 and forwarded by receiver module 211 to a data sink 215. In an embodiment, device 220 is a broadcast television transmitter and device 210 is a receiver for a television terminal.

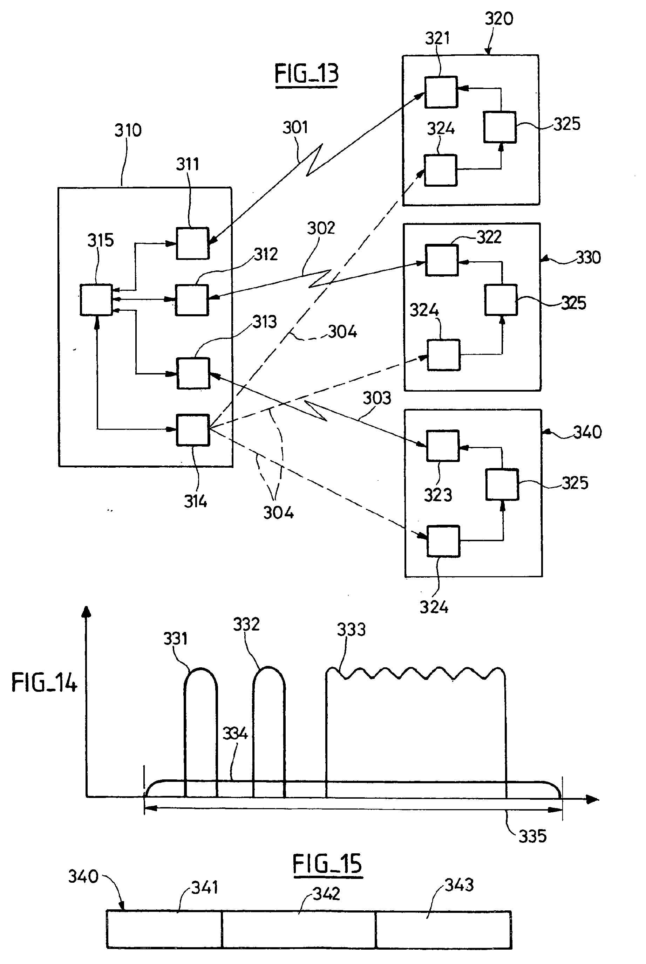

In another embodiment illustrated by Figure 13, the wireless communication system comprises a plurality of traffic communication systems for implementing a plurality of traffic communication channels, e.g. OFDM or other, and a secondary system for implementing a secondary channel, e.g. spread spectrum or other. The secondary channel overlaps with some or all traffic channels in the frequency domain, yet it does not adversely affect the operation of the main systems. The secondary system serves to provide information to configuration systems for configuring the main systems.

Figure 13 shows a multi-standard base station 310 and a plurality of wireless terminals 320, 330 and 340. The terminals 320, 330 and 340 communicate with the base station 310 using different flexible wireless communication systems. For that purpose, a parameterized traffic communication module 311 and a parameterized traffic communication module 321 are installed in base station 310 and terminal 320 for establishing a wireless communication channel 301 of a first type. Additionally, a parameterized traffic communication module 312 and a parameterized traffic communication module 322 are installed in base station 310 and terminal 330 for establishing a wireless communication channel 302 of a second type. Additionally, a parameterized traffic communication module 313 and a parameterized traffic communication module 323 are installed in base station 310 and terminal 340 for establishing a wireless communication channel 303 of a third type. Traffic communication channels 301, 302 and 303 can be unidirectional or bidirectional. The base station 310 and the terminals 320, 330 340 also comprise spread spectrum communication modules 314 and 324 capable of establishing a wireless spread spectrum communication channel 304 for communicating configuration information between base station 310 and terminals 320, 330 and 340. Preferably, traffic communication channels 301, 302 and 303 have a higher data-rate than spread spectrum communication channel 304. The traffic communication modules 311, 312, 313 and 321, 322, 323 are implemented as flexible modules that include dynamically configurable or programmable components for dynamically changing operating parameters of the communication channels, e.g. the bandwidth of each channel. The base station 310 and the terminals 320, 330 340 also comprise configuration management modules 315 and 325 for controlling the configuration of the traffic communication modules as a function of the operating parameters to be applied.

The operation of the base station and the terminals is similar to the above-described embodiments. Here, spread spectrum communication channel 304 serves to advertise or negotiate the operating parameters of traffic channels having different types, hence different parameters. Preferably, base station 310 communicates the parameters to all terminals using spread spectrum communication channel 304 in broadcast mode.

Figure 15 shows a configuration advertisement message format that may be used in the system of Figure 13. The configuration advertisement message 340 comprises a field 341 for instructions and parameters relating to traffic channel 301, a field 342 for instructions and parameters relating to traffic channel 302, and a field 343 for instructions and parameters relating to traffic channel 303. In each field, the configuration data can be organized as shown on figure 4 or in any other manner.

The traffic channels 301, 302 and 303 are parameterized wireless channels of any type, e.g. OFDM, single-carrier, multi-carrier or other. Figure 14 shows an example in which spread spectrum channel 304 has an operating bandwidth that overlaps all three traffic channels with a much lower density of power. The spectra of channels 301, 302, 303 and 304 are schematically and illustratively shown by numerals 331, 332, 333 and 334. For example, the multistandard communication system of figure 13 operates in a predefined frequency band 335, e.g. a licensed band, having a total bandwidth of 1 to 100 MHz, preferably about 10 MHz.

Alternatively, the above embodiment with multiple parameterized channels can also be implemented as a point-to-multipoint system or peer-to-peer system comprising multi-standard terminals, i.e. a terminal comprising several traffic communication modules of different types. It will be appreciated that some components can be shared between several communication modules in a multi-standard base station or terminal, e.g. a shared radio front-end.

The functions of the various elements shown in the FIGs., including any functional blocks labeled as "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims. Unless otherwise explicitly specified herein, the drawings are not drawn to scale.

## Claims

1. A method for establishing a parameterized wireless communication charnel between at least two communication, devices, comprising the steps of:
communicating physical profile date (40) between a first communication, (10) device and a second communication device (20), wherein the physical profile date defines of least one operating parameter to be applied for establishing a traffic communication channel between the first and second communication, devices,
and configuring a flexible parameterized wireless communication transmitted in at least one of the first and second communication devises and a flexible parameterized wireless communication, receiver (11, 21) in at least the other of the first and second communication devices in accordance with the at least one operating parameter defined by the physical profile data, so as to establish the traffic communication channel (2) between the first and second communication devices,
**characterized in that** the physical profile data is communicated on a wireless spread spectrum channel (4) having an operational frequency range (8) that overlaps an operational frequency range (7) of the traffic communication channel.

2. The method as claimed in claim 1, wherein the physical profile data defiles a signal bandwidth of said traffic communication channel.

3. The method as claimed in claim 1, therein the flexible parameterized wireless communication transmitter and the flexible parameterized wireless communication receiver each include an orthogonal frequency division multiplexing baseband module (51, 61).

4. The method as claimed in claim 1, wherein the physical profile data defies at least one parameter selected from the group consisting of a signal bandwidth, a number of subcarriers, a sampling frequency, a subcarrier spacing and a symbol duration.

5. The method as claimed in claim 1, wherein the spread spectrum channel includes a direct sequence spread spectrum channel.

6. The method as claimed in claim 1, wherein the spread spectrum channel and the parameterized traffic communication channel use one of a time-division duplexing technique and a frequency-division duplexing technique.

7. A wireless communication device (10, 20, 110, 50, 60, 70, 80,210, 220, 310, 320) comprising a flexible parameterized communication transmitter (11, 21, 36, 51, 61, 71, 81, 211, 221, 311, 321, 312, 322, 313, 323) for transmitting data of a parameterized traffic communication channel,
a physical profile management means (13, 23, 38, 55, 65, 74, 83, 213, 223, 315, 325) for configuring the parameterized communication transmitter in accordance with at least one operating parameter to be applied for establishing the traffic communication channel,
**characterized in that** it comprises a spread spectrum communication means (12, 22, 37, 52, 62, 72, 82, 212, 222, 314, 324) for transmitting and/or receiving physical profile data on a wireless spread spectrum channel (4, 204, 304), wherein the physical profile data transmitted or received by the spread spectrum communication means defies the at least one operating parameter.

8. The communication device as claimed in claim 7, further comprising a shared radio frequency front-end (25, 26, 27, 28) for broth the spread spectrum communication means and the flexible parameterized communication transmitted.

9. The communication device as claimed in claim 7, wherein the flexible parameterized communication transmitter includes an orthogonal frequency division multiplexing baseband module (36, 51, 61).

10. The communication device as claimed in claim 7, wherein the spread spectrum communication means includes a direct sequence spread spectrum baseband module (37, 52, 62).

11. The communication device as claimed in claim 7, wherein the physical profile data includes a physical profile (42) currently used in the flexible parameterized communication transmitter.

12. The communication device as claimed in claim 7, wherein the physical profile data includes a future physical profile (44) and a time information (43) for using the future physical profile.

13. The communication device as claimed in claim 7, wherein the spread spectrum communication means is arranged for using a predefined spread spectrum channel or a predefined set of spread spectrum channels.

14. A base station comprising a wireless communication device as claimed in claim 7, wherein the spread spectrum communication means is capable of transmitting the physical profile data in broadcast mode in of least one cell.

15. A base station comprising a wireless communication device as claimed in claim 7 and a spectrum management module for allocating a bandwidth to the traffic communication channel based on information about spectrum availability, wherein the physical profile management means determines the at least one operating parameter so as to constrain the traffic communication channel within the cheated bandwidth.

16. A base station as claimed in claim 15, wherein the information about spectrum availability includes information about the operation of a third communication means.

17. A wireless terminal (70) comprising a communication device as claimed in claim 7, wherein the spread spectrum communication means is capable of receiving the physical profile data on the spread spectrum channel.

18. A wireless terminal comprising a communication device as claimed in claim 7, wherein the spread spectrum communication means is capable of sending physical profile request data on the spread spectrum channel for causing a base station to transmit physical profile data in response to said physical profile request data.

19. A wireless terminal as claimed in claim 18, wherein the physical profile request data comprise a description of a physical condition of the terminal.

20. A wireless terminal as claimed in claim 19, wherein the physical condition includes at leat one of a velocity and a position of the terminal.

## Patentansprüche

1. Verfahren zum Aufbau eines parametrierten drahtlosen Kommunikationskanals zwischen mindestens zwei Kommunikationsvorrichtungen, die folgenden Schritte umfassend:
Kommunizieren von physischen Profildaten (40) zwischen einer ersten Kommunikationsvorrichtung (10) und einer zweiten Kommunikationsvorrichtung (20),
wobei die physischen Profildaten mindestens einen für den Aufbau eines Verkehrskommunikationskanals zwischen der ersten und der zweiten Kommunikationsvorrichtung anzuwendenden Betriebsparameter definieren,
und Konfigurieren eines flexiblen parametrierten drahtlosen Kommunikationssenders in mindestens einer der ersten und der zweiten Kommunikationsvorrichtungen, und eines flexiblen parametrierten drahtlosen Kommunikationsempfängers (11, 21) in mindestens der anderen der ersten und der zweiten Kommunikationsvorrichtung gemäß dem mindestens einen von den physischen Profildaten definierten Betriebsparameter, um den Verkehrskommunikationskanal (2) zwischen der ersten und der zweiten Kommunikationsvorrichtung aufzubauen,
**dadurch gekennzeichnet, dass** die physischen Profildaten auf einem drahtlosen Spreizspektrumkanal (4), dessen Betriebsfrequenzbereich (8) eine Betriebsfrequenzbereich (7) des Verkehrskommunikationskanals überlappt, kommuniziert werden.

2. Verfahren nach Anspruch 1, wobei die physischen Profildaten eine Signalbandbreite des besagten Verkehrskommunikationskanals definieren.

3. Verfahren nach Anspruch 1, wobei der flexible parametrierte drahtlose Kommunikationssender und der flexible parametrierte drahtlose Kommunikationsempfänger jeweils ein Basisband-Modul mit orthogonalem Frequenzmultiplex (51, 61) umfassen.

4. Verfahren nach Anspruch 1, wobei die physischen Profildaten mindestens einen Parameter gewählt aus der Gruppe bestehend aus einer Signalbandbreite, einer Anzahl von Teilträgern, einer Abtastfrequenz, eines Teilträgerabstands und einer Symboldauer definieren.

5. Verfahren nach Anspruch 1, wobei der Spreizspektrumkanal einen Direct Sequence Spectrum-Kanal umfasst.

6. Verfahren nach Anspruch 1, wobei der Spreizspektrumkanal und der parametrierte Verkehrskommunikationskanal entweder eine Zeitduplextechnik oder eine Frequenzduplextechnik verwenden.

7. Drahtlose Kommunikationsvorrichtung (10, 20, 110, 50, 60, 70, 80, 210, 220, 310, 320), umfassend:
Einen flexiblen parametrierten Kommunikationssender (11, 21, 36, 51, 61, 71, 81, 211, 221, 311, 321, 312, 322, 313, 323) für die Übertragung von Daten auf einem parametrierten Verkehrskommunikationskanal,
ein Mittel zur Verwaltung des physischen Profils (13, 23, 38, 55, 65, 74, 83, 213, 223, 315,
325) zum Konfigurieren des parametrierten Kommunikationssenders gemäß mindestens einem für den Aufbau des Verkehrskommunikationskanals anzuwendenden Betriebsparameter,
**dadurch gekennzeichnet, dass** sie ein Spreizsprektrumkommunikationsmittel (12, 22, 37, 52, 62, 72, 82, 212, 222, 314, 324) für die Übertragung und/oder den Empfang von physischen Profildaten auf einem drahtlosen Spreizspektrumkanal (4, 204, 304) umfasst,
wobei die von dem Spreizspektrumkommunikationsmittel übertragenen oder an diesem empfangenen physischen Profildaten den mindestens einen Betriebsparameter definieren.

8. Kommunikationsvorrichtung nach Anspruch 7, weiterhin umfassend ein gemeinsames Funkfrequenz-Frontend (25, 26, 27, 28) für sowohl das Spreizspektrumkommunikationsmittel als auch den flexiblen parametrierten Kommunikationssender.

9. Kommunikationsvorrichtung nach Anspruch 7, wobei der flexible parametrierte Kommunikationssender ein Basisband-Modul mit orthogonalem Frequenzmultiplex (36, 51, 61) umfasst.

10. Kommunikationsvorrichtung nach Anspruch 7, wobei das Spreizspektrumkommunikationsmittel ein Basisband-Modul mit Direct Sequence Spectrum-Kanal (37, 52, 62) umfasst.

11. Kommunikationsvorrichtung nach Anspruch 7, wobei die physischen Profildaten ein momentan in dem flexiblen parametrierten Kommunikationssender verwendetes physisches Profil (42) enthalten.

12. Kommunikationsvorrichtung nach Anspruch 7, wobei die physischen Profildaten ein zukünftiges physisches Profil (44) und eine Zeitinformation (43) für die Verwendung des zukünftigen physischen Profils umfassen.

13. Kommunikationsvorrichtung nach Anspruch 7, wobei das Spreizspektrumkommunikationsmittel für die Verwendung eines vordefinierten Spreizspektrumkanals oder eines vordefinierten Satzes von Spreizspektrumkanälen ausgelegt ist.

14. Basisstation, umfassend eine drahtlose Kommunikationsvorrichtung gemäß Anspruch 7, wobei das Spreizspektrumkommunikationsmittel fähig ist, die physischen Profildaten im Broadcast-Modus in mindestens einer Zelle zu übertragen.

15. Basisstation, umfassend eine drahtlose Kommunikationsvorrichtung gemäß Anspruch 7, und ein Spektrumverwaltungsmodul zum Zuweisen einer Bandbreite an den Verkehrskommunikationskanal auf der Basis von Informationen über die Spektrumverfügbarkeit, wobei das Mittel zur Verwaltung des physischen Profils mindestens einen Betriebsparameter bestimmt, um den Verkehrskommunikationskanal innerhalb der zugewiesenen Bandbreite zu halten.

16. Basisstation nach Anspruch 15, wobei die Informationen über die Spektrumverfügbarkeit Informationen über den Betrieb eines dritten Kommunikationsmittels enthalten.

17. Drahtloses Endgerät (70) mit einer Kommunikationsvorrichtung gemäß Anspruch 7, wobei das Spreizspektrumkommunikationsmittel fähig ist, die physischen Profildaten auf dem Spreizspektrumkanal zu empfangen.

18. Drahtloses Endgerät mit einer Kommunikationsvorrichtung gemäß Anspruch 7, wobei das Spreizspektrumkommunikationsmittel fähig ist, Daten für die Anforderung eines physischen Profils auf dem Spreizspektrumkanal zu senden, um eine Basisstation zu veranlassen, physische Profildaten in Antwort auf die besagten Daten für die Anforderung eines physischen Profils zu übertragen.

19. Drahtloses Endgerät nach Anspruch 18, wobei die Daten für die Anforderung eines physischen Profils eine Beschreibung eines physischen Zustands des Endgeräts umfassen.

20. Drahtloses Endgerät nach Anspruch 19, wobei der physische Zustand mindestens entweder eine Geschwindigkeit oder eine Position des Endgeräts umfasst.

## Revendications

1. Procédé pour établir un canal de communication sans fil paramétré entre au moins deux dispositifs de communication, comprenant les étapes suivantes :
communiquer des données de profil physique (40) entre un premier dispositif de communication (10) et un deuxième dispositif de communication (20), dans lequel les données de profil physique définissent au moins un paramètre de fonctionnement à appliquer pour établir un canal de communication de trafic entre les premier et deuxième dispositifs de communication,
et configurer un émetteur de communication sans fil paramétré flexible dans au moins un parmi les premier et deuxième dispositifs de communication et un récepteur de communication sans fil paramétré flexible (11, 21) dans au moins l'autre parmi les premier et deuxième dispositifs de communication conformément à au moins un paramètre de fonctionnement défini par les données de profil physique, de manière à établir le canal de communication de trafic (2) entre les premier et deuxième dispositifs de communication,
**caractérisé en ce que** les données de profil physique sont communiquées sur un canal à spectre étalé sans fil (4) ayant une plage de fréquences opérationnelles (8) qui chevauche une plage de fréquences opérationnelles (7) du canal de communication de trafic.

2. Procédé selon la revendication 1, dans lequel les données de profil physique définissent une bande passante de signal dudit canal de communication de trafic.

3. Procédé selon la revendication 1, dans lequel l'émetteur de communication sans fil paramétré flexible et le récepteur de communication sans fil paramétré flexible comprennent chacun un module de bande de base à multiplexage par répartition orthogonale de la fréquence (51, 61).

4. Procédé selon la revendication 1, dans lequel les données de profil physique définissent au moins un paramètre choisi dans le groupe constitué d'une bande passante de signal, de plusieurs sous-porteuses, d'une fréquence d'échantillonnage, d'un espacement de sous-porteuses et d'une durée du symbole.

5. Procédé selon la revendication 1, dans lequel le canal à spectre étalé comprend un canal à spectre étalé à séquence directe.

6. Procédé selon la revendication 1, dans lequel le canal à spectre étalé et le canal de communication de trafic paramétré utilisent une technique de duplexage par répartition dans le temps ou une technique de duplexage par répartition en fréquence.

7. Dispositif de communication sans fil (10, 20, 110, 50, 60, 70, 80, 210, 220, 310, 320) comprenant :
un émetteur de communication paramétré flexible (11, 21, 36, 51, 61, 71, 81, 211, 221, 311, 321, 312, 322, 313, 323) pour transmettre des données sur un canal de communication de trafic paramétré,
un moyen de gestion de profil physique (13, 23, 38, 55, 65, 74, 83, 213, 223, 315, 325) pour configurer l'émetteur de communication paramétré conformément à au moins un paramètre de fonctionnement à appliquer pour établir le canal de communication de trafic,
**caractérisé en ce qu'**il comprend un moyen de communication à spectre étalé (12, 22, 37, 52, 62, 72, 82, 212, 222, 314, 324) pour transmettre et/ou recevoir des données de profil physique sur un canal à spectre étalé sans fil (4, 204, 304), dans lequel les données de profil physique transmises ou reçues par le moyen de communication à spectre étalé définissent l'au moins un paramètre de fonctionnement.

8. Dispositif de communication selon la revendication 7, comprenant en outre une tête radiofréquence partagée (25, 26, 27, 28) à la fois pour le moyen de communication à spectre étalé et pour l'émetteur de communication paramétré flexible.

9. Dispositif de communication selon la revendication 7, dans lequel l'émetteur de communication paramétré flexible comprend un module de bande de base à multiplexage par répartition orthogonale de la fréquence (36, 51, 61).

10. Dispositif de communication selon la revendication 7, dans lequel le moyen de communication à spectre étalé comprend un module de bande de base à spectre étalé à séquence directe (37, 52, 62).

11. Dispositif de communication selon la revendication 7, dans lequel les données de profil physique comprennent un profil physique (42) actuellement utilisé dans l'émetteur de communication paramétré flexible.

12. Dispositif de communication selon la revendication 7, dans lequel les données de profil physique comprennent un futur profil physique (44) et une information de temps (43) pour utiliser le futur profil physique.

13. Dispositif de communication selon la revendication 7, dans lequel le moyen de communication à spectre étalé est conçu pour utiliser un canal à spectre étalé prédéfini ou un ensemble prédéfini de canaux à spectre étalé.

14. Station de base comprenant un dispositif de communication sans fil selon la revendication 7, dans laquelle le moyen de communication à spectre étalé peut transmettre les données de profil physique en mode de diffusion dans au moins une cellule.

15. Station de base comprenant un dispositif de communication sans fil selon la revendication 7 et un module de gestion de spectre pour attribuer une bande passante au canal de communication de trafic sur la base d'informations concernant la disponibilité du spectre, dans laquelle le moyen de gestion de profil physique détermine l'au moins un paramètre de fonctionnement de manière à contraindre le canal de communication de trafic dans la bande passante attribuée.

16. Station de base selon la revendication 15, dans laquelle les informations concernant la disponibilité du spectre comprennent des informations concernant le fonctionnement d'un troisième moyen de communication.

17. Terminal sans fil (70) comprenant un dispositif de communication selon la revendication 7, dans lequel le moyen de communication à spectre étalé peut recevoir les données de profil physique sur le canal à spectre étalé.

18. Terminal sans fil comprenant un dispositif de communication selon la revendication 7, dans lequel le moyen de communication à spectre étalé peut envoyer des données de demande de profil physique sur le canal à spectre étalé pour entraîner la transmission de données de profil physique par une station de base en réponse auxdites données de demande de profil physique.

19. Terminal sans fil selon la revendication 18, dans lequel les données de demande de profil physique comprennent une description d'une condition physique du terminal.

20. Terminal sans fil selon la revendication 19, dans lequel la condition physique comprend au moins un élément parmi une vitesse et une position du terminal.
